# EUROPEAN PATENT SPECIFICATION

(11) **EP 3 242 767 B1**
(45) Date of publication and mention of the grant of the patent: **02.01.2019**
(21) Application number: 16701219.4
(22) Date of filing: 05.01.2016
(51) Int. Cl.: B23K 9/095

(54) **SYNCHRONIZED IMAGE CAPTURE FOR WELDING MACHINE VISION**
SYNCHRONISIERTE BILDERFASSUNG FÜR SCHWEISSMASCHINENVISION
CAPTURE D'IMAGE SYNCHRONISÉE POUR UNE VISION DE MACHINE À SOUDER

(30) Priority: 07.01.2015 US 201562100531 P; 22.12.2015 US 201514978200
(43) Date of publication of application: 15.11.2017
(73) Proprietor: Illinois Tool Works Inc., Glenview, IL 60025 (US)
(72) Inventor: PESME, Francois, Appleton, Wisconsin 54914 (US); HSU, Christopher, Appleton, Wisconsin 54914 (US); WATSON, William Todd, Appleton, Wisconsin 54914 (US)
(74) Representative: Trinks, Ole
(86) International application number: PCT/US2016/012164
(87) International publication number: WO 2016/111999

(56) References cited:
- EP-A1- 0 165 501
- JP-A- 2002 178 148
- US-A- 4 280 137
- US-A1- 2014 263 249

## Description

### BACKGROUND

Limitations and disadvantages of conventional approaches to welding will become apparent to one of skill in the art, through comparison of such approaches with some aspects of the present method and system set forth in the remainder of this disclosure with reference to the drawings.

A system comprising an automated welding device comprising a camera, processing circuitry, a welding torch, and an electromechanical subsystem as defined in the preamble of claim 1 is known from US 4 280 137 A.

### BRIEF SUMMARY

Methods and systems are provided for synchronized image capture for welding machine vision substantially as illustrated by and/or described in connection with at least one of the figures, as set forth more completely in the claims.

### BRIEF DESCRIPTION OF THE DRAWINGS

FIGS. 1A-1C show an example welding translation platform in accordance with an example implementation of this disclosure.
FIG. 2 is a flowchart illustrating an example process for weld joint edge detection, in accordance with an example implementation of this disclosure.
FIG. 3 depicts an example image captured of a joint to be welded.
FIGS. 4A and 4B illustrate determination of joint fit by the welding translation platform of FIG. 1.
FIG. 5 illustrates a system in which weld joint information is communicated among welding translation platforms.
FIGS. 6A-6E depicts example images captured by the camera of the welding translation platform of FIG. 1.
FIG. 7 illustrates an example implementation in which frame captures are synchronized to the shorting period in a GMAW welding application.
FIG. 8 illustrates an example implementation in which frame capture is synchronized to the welding current.

### DETAILED DESCRIPTION

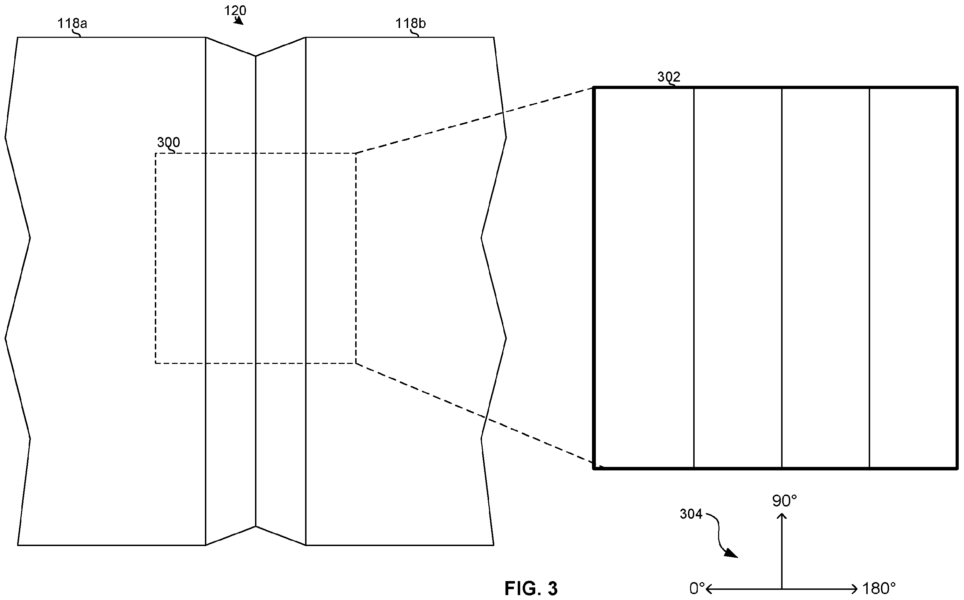

Aspects of this disclosure provide for dynamic feedback and/or feed-forward based control of an automated welding device. Aspects of this disclosure provide for identification and dynamic tracking of one or more edges of using an optical camera-based system with associated circuitry. Aspects of this disclosure may be used to automate the dynamic lateral tracking of an automated welding translation platform ("bug") used to weld pipe together. In an example implementation, the system comprises a camera (optics and image sensor) operable to capture images (e.g., image 302 corresponding to field of view 300 in FIG. 3), circuitry (e.g., image processor 102) operable to perform live-time processing of the images to implement an algorithm for extracting features and determining the relative position between the weld torch contact tip and the weld joint, and circuitry to command, control, or otherwise influence the lateral positioning of the weld torch relative to the weld joint (either through electrically controlled motors, servos, etc. or through guidance to a weld operator).

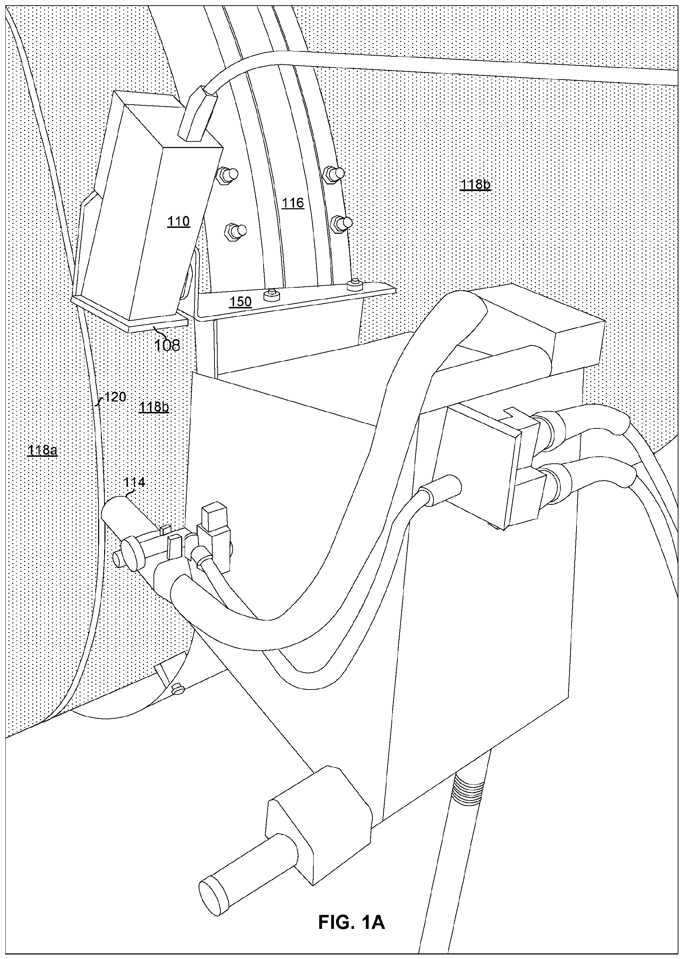

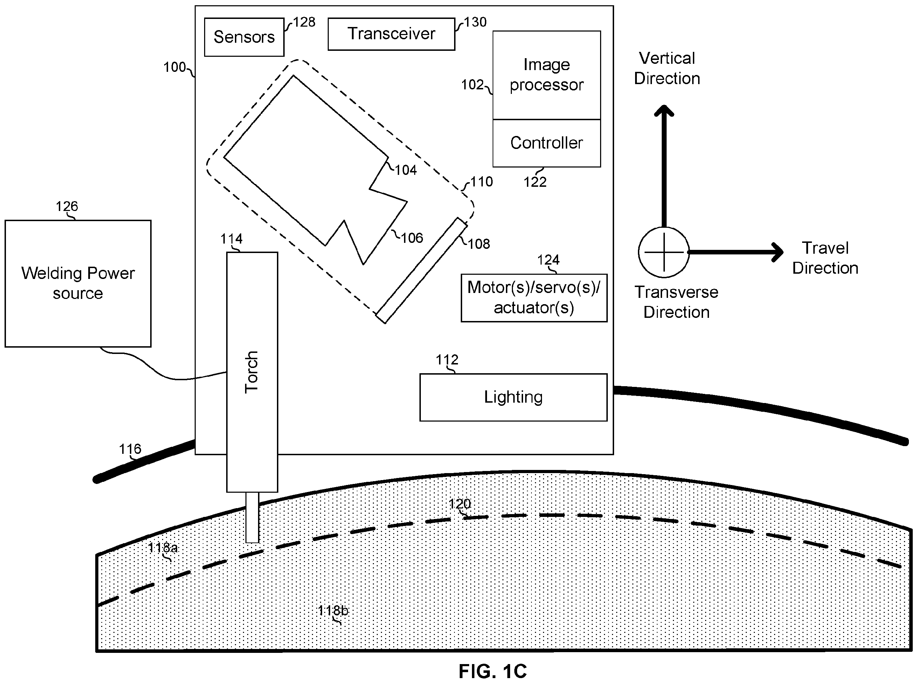

Referring to FIGS. 1A-1C, there is shown two pieces of pipe 118a and 118b to be joined together at a common weld joint 120 by a welding translation platform (or welding "bug") 100, which is attached to one or both of the pipes 118a and 118b by a track 116. Also shown is in FIG. 1C a power source 126 that supplies power for welding.

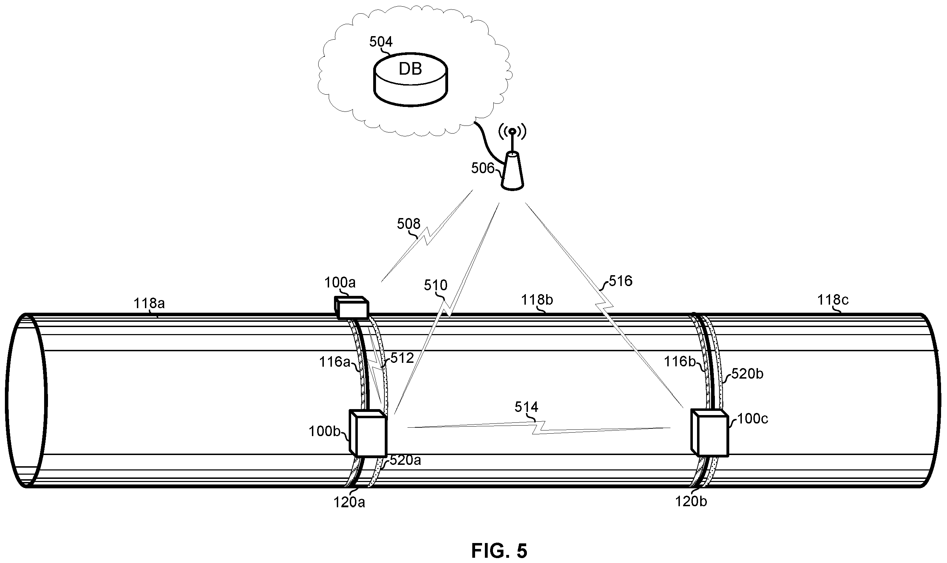

The track 116 comprises, for example, a metal band (or chain) and/or frame that is temporarily attached to the pipe (e.g., clamped, held via magnets, and/or the like). The track 116 guides, and may help propel, the bug 100 around the pipe. The track 116 and/or pipe(s) 118a and 118b may comprise a marking, sensor, transmitter, magnet, and/or other feature to act as a point of reference (a "datum"). Example markings 520a and 520b are shown in FIG. 5. Data collected by the bug 100 may then be referenced to the position along the track 116 at which it was collected such that a subsequent bug mounted to the track 116 can determine which data from bug 100 applies at which point(s) along the track 116. Data captured by the camera 104 for a particular location along the joint 120 may be stored (e.g., in memory of the camera 104, bug 100, and/or a server to which the camera 104 and/or bug 100 is communicatively coupled) together with the datum captured at that location. This may be performed during welding or during a pass in which welding is not occurring. Then, during a subsequent pass, the bug 100 simply looks (via camera 104) at the datum without looking at the joint, looks up the joint geometry (e.g., location of one or more edges of the joint) from the stored data, and sends corresponding control signals to various components of the bug 100. A benefit of this approach is that the same camera 104 can be used without the cost of an additional positioning (e.g., GPS) system for data recall at subsequent passes. Another benefit is that the camera can be physically kept away from the harsh environment of arc and sparks. The camera 104 may not have to be specifically designed for welding. The camera 104 may support a high dynamic range (HDR) technique in which it can capture ranges of light intensity that vary by 100 dB or more. The HDR technique may use one or more of: an imager of nonlinear or logarithmic response; local adaptation (also known as artificial retina); well capacity adjustment; spatially varying exposure times; per pixel control of integration time to saturation, and fusion of multiple captures with varying integration time.

The camera 104 may support a synchronization means so that the images are acquired only when voltage between electrode and workpiece(s) is below a determined threshold (e.g., during the short circuit periods when the arc is absent) and/or when the current flowing between electrode and workpiece(s) is below a determined threshold. The camera may employ both (1) HDR and (2) voltage current, power, and/or control signal state synchronization simultaneously. Grayscale imaging can be more cost effective than laser scanner, typically by a factor of 10, however it suffers from arc interference. The HDR and "selective" image capture during periods of reduced arc brightness may overcome its limitation of grayscale machine vision yet at low cost. It is possible to pre-record the location of one or more edges of the joint, joint geometry including high-low and gap, together with the datum reference on the same bug as the root pass weld; or separate such as in the facing machine. Then the data can be used in root, hot, fill and cap welding passes by viewing the datum reference only and recall the joint / joint data.

In an example implementation, the datum (e.g., 520a) may be a strip of pattern for optical recognition that changes along the pipe joint and can be tagged to the location along the joint and joint geometry. The strip may go around the pipe in a manner similar to the track 116. The strip may be laser etched into the pipe itself adjacent to the joint as part of the facing / cutting operation. Alternatively, or additionally, the strip can be attached to the pipe 118a and/or 118b by an adhesive. In an example implementation, the strip may be a high contrast QR-code-like pattern used for localization. In another example implementation, the strip may be a random / irregular speckle pattern. Such a speckle pattern would be unique at each pipe location due to its random nature and can therefore be used to uniquely tag a specific spot on the pipe where this joint data is captured. A low cost, low power laser can be used to mark the surface of the pipe to create the spackle effect.

The bug 100 comprises image processor 102, camera 104 having lens 106, optical shield 108, enclosure 110, lighting subsystem 112, weld torch 114, controller 122, motor/servo/actuator subsystem 124, sensors 128, and transceiver 130.

The camera 104 comprises one or more imagers (e.g., CCD, CMOS, MCT detector array, InGaAs detector array, GaAs detector array, AlGaAs detector array, HdCdTe detector array, LnSb detector array) and associated driver circuitry operable to acquire images and transmit them to an image processor 102. The camera 104 may comprise an imager with a global shutter. The camera 104 may comprise a monochrome imager, which may provide sufficient image features while reducing (relative to a color imager) the bandwidth of image data to be transmitted and processed. The density and number of pixels of the imager(s) may be such that, with the camera 104 mounted (e.g., via a bracket 150 as shown) a suitable distance from the weld joint 120 for the lens 106, the lateral resolution near the image center is about 0.05 mm per pixel. Higher resolution may be used at the expense of requiring additional image processing computational power. A shorter distance between the camera 104 and the joint 120 and/or surface of pipe 118 to be imaged may be better for detecting features in the image, but must be balanced against placing the camera 104 in a more protected and mechanically convenient location.

The imager(s) of the camera 104 may be high dynamic range (HDR) imager(s) operable to produce a useable image when exposed to a high-contrast field of view including a very wide range of incident light within the same image frames. The needed dynamic range of the imager(s) can be reduced by excluding the weld arc and/or areas very near the arc from the camera field of view. The needed dynamic range of the imagers may be reduced by illuminating the field of view, using a lighting subsystem 112 outputting bright light that reduces the contrast due to the generation of bright, flashing weld arc light on areas of the pipes 118 in the field of view of the camera 104.

One or more optical band-pass filters on the lens 106 may be used to reduce the effect of bright weld arc light, thus reducing the necessary contrast of the imager(s). A light filter may be used on the lens 106 such that light from the weld arc/puddle and nearby area are attenuated before reaching the imager(s) while light from areas further from the weld arc are attenuated less or not at all. Such a filter may be a fixed filter with two light attenuation level zones or a light attenuation gradient or it could be an electronically controlled filter similar to those used on weld helmet lens shades. In an example implementation, multiple filters having multiple narrow passbands selected to avoid spectral peaks of the arc may be used to capture a combined image.

When the camera 104 does comprise HDR imager(s), however, exposure times may be shorter and frame rates faster than can be used with non-HDR imagers. As discussed below, this may increase immunity to weld spatter.

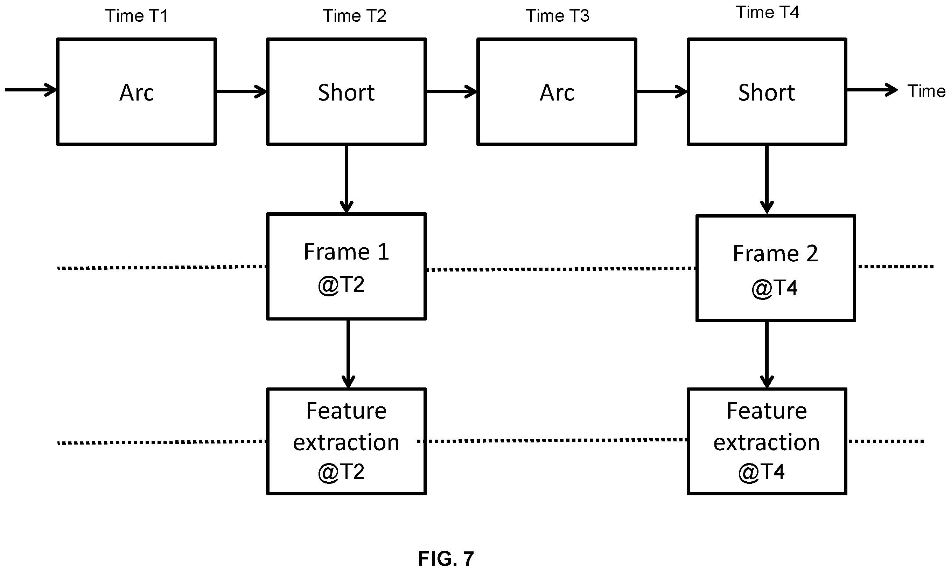

In an example implementation, referring to FIG. 7, the problem of arc brightness resulting in an unusable (e.g., a total white image) is to avoid capturing images when the arc is present and only capture images during the short circuit phase of the GMAW welding process. Short circuit is a phenomenon that the liquid metal hanging from solid wire is touching the weld pool and the arc is extinguished momentarily. It may occur involuntarily during short-circuiting processes, such as Miller's Regulated Metal Deposition™ process, where the onset of short circuit is not programmed. In this case, a sensor may detect short circuits and, upon detecting a short, trigger the camera 104 to capture a frame. In the example shown, the arc is present at times T1 and T3 and short circuit occurs at times T2 and T4, which triggers capture of Frame F1 at time T2 and Frame F2 at time T4. Thus, the frames are captured without the arc and the challenging arc welding machine vision problem such that machine vision can be performed on the frames. A time series of frames taken during a series of short circuits {(F1, T2), (F2, T4), ...} may be assembled for the process control such as joint tracking and penetration control, as described herein. In an example implementation, a voltage sensor may be used to detect the short circuits. In another example implementation, a fast acting photodiode may be used to detect short circuit.

In an example implementation, pulse spray transfer may be used in pipe welding instead of short circuit transfer. With this technique, welding voltage may be kept low to cause a short circuit at the down ramp of each pulse. With this technique, the short duration may have more to do with fluid dynamics than with programming of the welding equipment, but where the short duration is sufficiently long / the image exposure sufficiently fast, similar feedback-based synchronization means may be employed to capture image time series during the shorts.

Another technique is Miller's Controlled Short Circuit (CSC) process, also known as reciprocating wire feed (RWF-GMAW). With this technique short circuit occurrence and duration is more predictable than conventional CV short circuiting transfer, also known as short arc and dip transfer. In this case, the software controls when the short circuit takes place, and how long is the short circuit (to accommodate picture taking exposure time), and when the short circuit ends. During the arc phase of CSC/RWF, the process can be constant current, constant voltage, AC/DC, pulse, or some combination thereof. The intentional short circuit may vary from 1Hz to 120Hz, but typically every 0.5mm to 2mm travel distance. The controller for RWF may be synchronized with the camera image capture so that the images are taken during the short circuit periods and possibly at determined clock and determined frame rate.

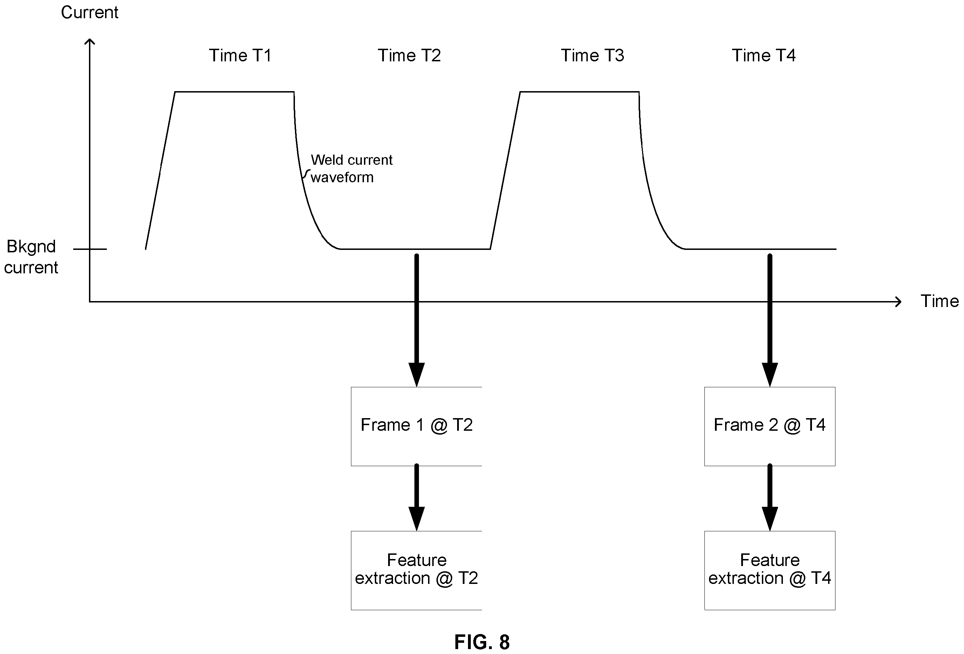

Referring to FIG. 8, image capture may instead, or in addition, be synchronized to the welding current waveform. For example, image capture may be triggered when the current flowing between electrode and workpiece is below a determined threshold (e.g., the threshold may be at, or just above, the background current level). The background current may be, for example, 10 to 50 Amps and the arc brightness at that current may be 1 to 2 orders of magnitude lower than at the peaks of the current waveform.

Arc intensity may also be relatively low, and suitable for image capture, during brief "whisker shorts" occurring in low-voltage, high-speed pulse welding. These may occur at various points along the pulse waveform including at the end of peak current, during current ramp down, and/or at the onset of the background current. Accordingly, in an example implementation, image capture may be triggered by such whisker shorts using methods and systems described herein.

In an example implementation, image capture may be synchronized to a control signal which determines arc intensity. One example of such a control signal is an output of a waveform generator or state machine or logic sequence firmware (e.g., such a signal may control ramp up and ramp down of weld current). One example of such a control signal is a signal which controls a weaving pattern of the electrode. The state of this control signal may correspond to the distance between the wall of a joint and the electrode such that capture is triggered when the electrode is close to (perhaps momentarily shorting to) the wall of the joint. Another example of such a control signal is a signal which controls wire feed speed (e.g., a control signal which controls the reciprocating action of the wire in the CSC/RWF process described above). The state of this control signal may correspond to whether the wire is extending or retracting and capture may, for example, be triggered when the state of the signal is transitioning from extension to retraction. Another example of such a control signal is a signal which controls motion of welding torch of the automated welding device, or of the automated welding device itself. In this case, capture may be triggered, for example, on the state of a signal which controls weaving of the torch, a signal which controls weaving of the automated device itself, a signal which controls rotation of the wire/electrode, and/or the like.

Returning to FIGS. 1A-1C, use of HDR imager(s) and/or short-circuit synchronized image capture and/or other techniques such as those above to mitigate the impact of the bright arc, may enable the weld arc and/or weld puddle to be included in the camera field of view. In such instances, the image processor 102 may implement image processing algorithms to measure characteristics (e.g., size, wavelength of emitted light, etc.) of the arc and/or puddle, to determine information about weld penetration, and/or perform advanced weld defect detection. The image processor 102 may implement an algorithm that estimates the temperature (e.g., a temperature profile or contour map) of the weld puddle based on its size (e.g., surface area, volume, width, and/or depth), wavelength of emitted light, and/or brightness. Where the camera is configured to capture a range of wavelengths, the temperature of a portion of the puddle may be calculated based on the wavelengths of light emitted from that portion of the puddle.

In an example implementation, the camera 104 is monocular due to the lower cost (only one lens, imager, and associated electronics) and the lower computational requirement for processing monocular image data as opposed to stereoscopic image data. In such an implementation, the image processor 102 may be operable to implement algorithms for inferring 3D information from 2D pixel data (possible in combination with a store of data pertaining to known dimensions of objects in the field of view) and/or for using structured lighting (e.g., protected onto the surface of the pipe 118a and/or pipe 118b) to interpret the 3D shape of viewed objects.

In an example implementation, the camera 104 is stereoscopic which enables the image processor 102 to implement algorithms for unambiguous 3D interpretation of the geometry of features seen by the camera without need for other techniques such as the projection of structured lighting onto the objects being viewed.

The lens 106 comprises one or more optical elements operable to focus the desired field of view onto the imager(s) of the camera 104. The lens 106 may be augmented with optical coatings and filters. The lens 106 may be a fixed focus (prime lens) and fixed aperture lens. Such a lens is cost effective and typically works well in implementations where distance between the camera 104 and the joint 120 or surface of pipes 118 is relatively fixed. Alternatively, the lens 106 may have a mechanically and/or electronically controlled focus and/or aperture. In an example implementation, the lens 106 is characterized by a medium aperture of about f8 to provide balance between: (1) wide focus depth of field; and (2) light capture that enables short exposure times. The lens 106 may have a focal length that, when paired with the camera 104 and the expected distance to the weld joint 120, produces a lateral resolution of 0.05 mm per pixel or less.

The enclosure 110 comprises a mechanical housing and/or other structures that provide the camera 104 and lens 106 with environmental protection (from items such as weld spatter, liquids, dust, mechanical impact, electromagnetic interference, etc.). The enclosure 110 may, for example, comprise an optical shield 108 which is a transparent or semi-transparent (at wavelengths to which the imager(s) of the camera 104 is/are sensitive) structure that protects the camera 104 from the environmental hazards while allowing the camera 104 to capture images of the of the weld joint 120 while welding is in progress. The shield 108 may be easily cleanable and/or replaceable. In another example implementation, the optical shield may not be a physical structure but, instead, comprise a high-speed gas source to create an air curtain/knife that protects the camera 104 by deflecting debris before it reaches the lens 106.

The lighting subsystem 112 comprises light elements (e.g., LED, fluorescent, incandescent, halogen, laser, and/or any other suitable type of light) and associated circuitry for controlling characteristics (e.g., intensity, wavelength, etc.) of the lighting generated by the light elements. The lighting subsystem 112 may be operable to illuminate the weld joint 120 from a determined angle or angles to enhance the images captured by the camera 104 such that edges of the joint 120 and/or other features of the pipes 118a and 118b can be more easily and consistently identified using the image processing algorithms. The lights may be operable to provide any suitable type of lighting such as dark-field lighting, bright-field lighting, or a combination of the two. Wavelengths emitted by the lighting subsystem 112 may be of a narrow range of wavelengths determined in combination with a passband of, for example, wavelengths of sensitivity of the imagers of camera 104, the pass-band of an optical filter mounted to lens 106, and/or wavelengths in the pass-band of the optical shield 108. Conversely, wavelengths emitted by a welding arc may fall within a stop band (also referred to as "rejection band") of an optical filter mounted to lens 106 and/or a stop band of the optical shield 108. The lighting on/off state, position, and/or orientation may be controlled by the controller 122 and subsystem 124. Characteristics of the lighting subsystem 112, such as: position/orientation, on-off state, wavelength, and/or light intensity, may be controlled in real-time while welding is in progress. The control of the characteristics of the lighting subsystem 112 may be based on, for example, current welding parameters (e.g., travel angle, work angle, travel speed, aim, and contact-tip-to-work distance), which may, for example, be determined from analysis of the captured images by image processor 102. The control of the characteristics of the lighting subsystem 112 may be based on, for example, weld equipment settings and/or output (e.g., current setting, measured current output, voltage setting, measured voltage output, wire speed setting, measured wire speed, and/or the like) which may, for example, be communicated from the welding power source 126 to the controller 122. The control of the characteristics of the lighting subsystem 112 may be based on, for example, characteristics of the pipes 118a and 118b and/or joint 120 (e.g., alignment of the two pies 118a and 118b, width and depth of the joint 120, radius of the pipes 118, type of metal of the pipes 118, etc.) which may, for example, be determined from analysis of the captured images by image processor 102. The control of the characteristics of the lighting subsystem 112 may be based on, for example, amount and/or direction of ambient lighting and/or brightness of the arc during the welding process.

The image processor 102 comprises circuitry for processing the images acquired by the camera 104. The image processor 102 may implement image processing algorithms to extract useful information such as, for example, type and/or dimensions of the pipes 118a and 118b, dimensions and location of the weld joint 120 (including "joint fit"), welding parameters (e.g., work angle, travel angle, travel speed, aim, and contact-tip-to-work-distance), ambient lighting, arc brightness, and/or the like. The image processor 102 may be mounted to the bug 100 or may be physically separate from the bug and may communicate with the bug 100 via a wired, wireless, and/or optical communication link.

The controller 122 comprises circuitry operable to control the other components of the bug 100. This may comprise, for example, executing instructions of an operating system/state machine/etc. which controls generation of control signals output to the camera 104, lens 106, weld torch 114, image processor 102, lighting subsystem 112, and motor(s)/servo(s) 124. The controller 122 and image processor 102 may be implemented by a single multifunction processor. The controller 122 may be mounted to the bug 100 or may be physically separate from the bug and may communicate with the bug 100 via a wired, wireless, and/or optical communication link. The controller 122 may also comprises circuitry operable to communicate with the power source 126 for controlling the power source (e.g., adjust voltage and/or current output to the torch 114) and/or receiving information (e.g., measured voltage and/or current output) from the power source 126. The controller 122 may comprise memory for storing instructions to be executed by the controller 122, memory for temporary storage of run-time data, and memory for long-term storage of data. Data written to long-term storage may include data gathered during a pass around the joint 120. Such data may include, for example, images captured during a pass along the joint 120; determined locations of the edges of the joints 120 during a pass around the joint 120; settings of lighting subsystem 112, camera 104, power source 126, and/or subsystem 124 during a pass along the joint 120; readings from the sensors 128 and/or power source 126 during a pass along the joint 120; welding parameters determined from image processing during a pass around the joint 120; and/or the like.

The weld torch 114 is an electromechanical subsystem that comprises an electrode and guides the welding wire to the weld joint 120, conducts power from its contact tip through the electrode to the weld arc, and may carry and direct shielding gas to cover the weld puddle. The welding torch 114 may, for example, be configured for performing shielded metal arch welding, TIG welding, MIG welding, or any other type of welding.

The motor(s)/servo(s)/actuator(s) subsystem 124 is operable to control movement, position, orientation of the bug 100 and/or of various components of the bug 100 relative to the bug 100 and/or relative to each other. The subsystem 124 may propel the bug 100 along the track116. The subsystem 124 may be operable to move the weld torch 114 laterally with respect to the translation track 116. For example, the entire bug 100 may be moved laterally, the torch 114 may be moved relative to the rest of the bug 100, or the torch 114, camera 104, and lighting subsystem 112 may be moved together. In an example implementation that uses the latter approach, the lighting subsystem 112, camera 104 and lens 106, and weld torch 114 might be mounted to a common plate that can be moved, during the welding process, relative to the rest of the bug 100. The subsystem 124 may be operable to position the torch 114, lighting subsystem 112, camera 104 and/or other components of the bug 100 along multiple axis directions. The subsystem 124 may be operable to adjust lateral position of the torch 114 (to vary aim, which may be used for centering on the joint and/or achieving a weaving pattern in which the frequency, width, and/or dwell time of oscillations may be controlled in real-time), vertical position of the torch 114 (to vary contact tip to work distance), lateral position of the camera 104 (to adjust field of view), vertical position of the camera 104 (to vary field of view or focus), angular position of the torch 114 (to vary travel angle and/or work angle), vertical position of the lighting subsystem 112, lateral position of the lighting subsystem 112, and/or angular position of the lighting subsystem 112.

The sensors 128 may comprise, for example, a MEMS orientation sensor, accelerometer, thermometer (e.g., infrared thermometer, pyrometer), photodiode, rangefinder (e.g., ultrasonic, laser-base, etc.), active RFID, acoustic wave sensor, voltage sensor (e.g., arc voltage sensor), current sensor (e.g., current delivered to welding electrode), and/or the like. The sensors 128 may, for example, be used for electronic image stabilization. In that regard, output from the sensors 128 may be input to the image processor 102 to enable the image processor 102 to confirm or apply image analysis corrections associated with brief time (higher frequency) motions of the camera 104. Output from the sensors 128 may be used for detecting possible damage to the bug 100, and/or that the bug 100 is not properly attached to the pipe 118. For example, movements (e.g., vibrations) outside of those normally detected by the sensors 128 may trigger an alert to have operator inspect the bug 100 and track 116. Similarly, movements (e.g., vibrations) outside of those normally detected by the sensors 128 may be used to predict when maintenance will be required for the translational platform mechanical or dynamic components (i.e., dynamic vibration/motion analysis to detect impending failure or degraded operation).

The sensors 128 may include a global positioning system (GPS) receiver which may provide automatic information about the location of the current weld along the pipeline. Such information may be stored in a database along with, for example, images and/or other data (e.g., pipe measurements, 'joint fit" measurements, etc.) for quality control purposes and/or for loading such data to later bugs working on the same joint, as described below with reference to FIG. 5. The sensors 128 may be used to provide a point of reference (a "datum") for data collected as the bug 100 travels around the joint 120. For example, images and/or other data collected by the bug 100 as it travels around the joint 120 may be tagged with time-coincident readings from the sensors 128. Data collected by the bug 100 may then be referenced to the position along the joint 120 at which it was collected such that a subsequent bug traveling along the joint 120 can determine which data from bug 100 applies at which point(s) along the joint. For example, the orientation of the bug 100 may change as the bug 100 moves along the joint 120 and each position along the joint 120 may correspond to a particular output from, for example, a MEMS orientation device of the sensors 128. As another example, the distance between the bug 100 and the ground and/or other fixed reference points may change as the bug 100 moves along the joint 120 and each position along the joint 120 may correspond to a particular combination or sequence of distance measurements. Measurements of the sensors 128 may be used in combination with an amount of time elapsed and/or a speed of the bug 100 along the joint 120 to determine the position of the bug 100, and thus correlate data collected with the position along the joint 120 at which it was collected.

The transceiver 130 comprises circuitry operable to send and receive signals in accordance with any suitable protocols such as Bluetooth, Wi-Fi, Zigbee, or any other suitable communication protocol.

In operation the bug 100 travels along the track 116 as the torch 114 welds the joint 120. As the bug 100 progresses along the track 116, images captured by the camera 104 are processed by image processor 102 to detect various characteristics pertinent to the welding process. Additionally, or alternatively, such characteristics may be determined based on outputs of the sensors 128 and/or based on *a priori* knowledge (e.g., stored database that the bug accesses via a network and/or stored in memory of the bug 100). As such, the characterization of the welding process is based on multi-modal learning. Such characteristics may include, for example: characteristics of the joint 120 (e.g., location of edges, location of center line, depth, and/or width), characteristics of the pipes 118 (e.g., size, shape, diameter, etc.), characteristics of the weld puddle (e.g., size), characteristics of the weld arc (e.g., size, brightness), and/or welding parameters (e.g., travel speed, travel angle, work angle, aim, and contact-tip-to-work distance), and/or temperature of the joint 120 (e.g., behind, at, and/or in front of (in the direction of travel) the weld puddle). Control based on the characteristics may comprise, for example, adjusting, during the welding process, one or more of: welding voltage, welding current, welding wire speed, angle(s) of the torch 114, lateral position of the torch 114, vertical position of the torch 114, oscillation width of the torch 114, speed at which the bug 100 travels along the track 116, exposure time of the camera 104, focal distance of the lens 106, darkness of filter on the lens 106, lateral position of the camera 104, vertical position of the camera 104, lateral position of the lighting subsystem 112, angle(s) of the lighting subsystem 112, vertical position of the lighting subsystem 112, intensity of the lighting subsystem 112, wavelength of the lighting subsystem 112, and/or temperature of the weld bead, puddle, and/or joint in front of the puddle using the image data (optionally in any embodiment, the imager(s) can be operable to determine temperature by capturing infrared wavelengths).

In an example implementation, the pipes 118a and/or 118b may be marked at fixed locations such that, appearance of the markers within the captured images may be used as a datum to correlate images and other collected data to the points along the joint 120 at which the images and data were collected. This may enable a subsequent bug to make use the data captured by a bug that had previously traveled along the same joint.

### Edge Detection

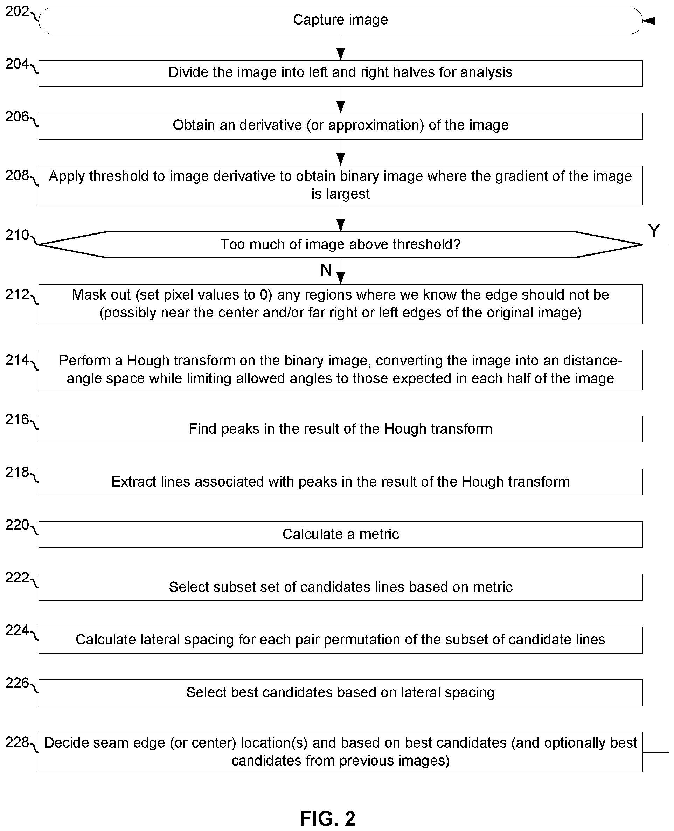

FIG. 2 depicts an example process performed by the image processor 102 for tracking the location of the joint 120. In block 202 an image (e.g., video frame) is captured. In block 204, the image is divided into left and right halves for analysis. In block 206, a derivative of the image (or approximation thereof) is determined. In an example implementation, this may be performed using a Sobel filter with gradient enhanced for vertical edges. In block 206, a threshold is applied to the image derivative to obtain a binary image where the gradient of the image is largest. In block 210, if too much of the image has pixels that are above the threshold, then line detection on this image is skipped due to likely contamination from significant weld spatter in the field of view. In such an instance, the process returns to block 202 for capture of a new image. Otherwise the process advances to block 212.

In block 212, any regions of the image where edges of the joint 120 should not be (e.g., too-near to the center of the image and/or too-far to the left or right left of center of the image 302) are masked out (e.g., set to a predetermined value such as 0 or 255 for 8-bit monochrome). In block 214, a Hough transform is performed on the binary image to convert the binary image into a distance-angle space. Angles of lines which are considered as candidates for edges of the joint 120 may be limited to angles expected in each half of the image. For example, lines detected in the left half of the image may be required to be between 76 to 89.5° clockwise from the cross-weld direction (the cross-weld direction is perpendicular to the joint being welded at the position of the torch 114) to be considered as candidates for a left one or more edge of the joint , whereas lines detected in the right half of the image may be required to be between 90.5 to 104° clockwise from the cross-weld direction to be considered as candidates for a right one or more edges of the joint 120 (where a vertical line = 90° as shown in the coordinate system 304 of FIG. 3). In block 216, peaks in the result of the Hough transform are detected. In block 218, lines associated with peaks in the Hough transform are extracted as candidates for one or more edges of the joint 120. In block 220, a metric is calculated for each of the candidates. In an example implementation, the metric for each of the candidate lines is the product of the normalized length of the line, the normalized value of the Hough peak, and the inverse of the normalized value of the distance from the image origin to the line along a vector perpendicular to the line. The candidate lines with larger metric values in the left half of the image are more likely to be a left edge of the joint 120 and the candidate lines with larger metric values in the right half of the image are more likely to be a right edge of the seam 120.

In block 222, a subset of the candidate lines from each half of the image are selected. For example, the subset of left half candidates having the top 50% of left-half metrics and the subset of right-half candidates having the top 50% of right-half metrics may be selected. In block 224, lateral distance between lines is determined for all possible pair permutations of the subset of candidates. That is, each left-half candidate in the selected subset is paired with each right-half candidate and the distance between the two is measured. In block 226, the possible pairings of the left-half and right-half candidates are pared down based on a comparison of the lateral distances determined in block 224 to the expected distance between the edges of the joint 120 (which may be, for example, programmed into the system by an operator or automatically extracted from a work-order associated with the joint 120 that the controller 122 retrieves from a database). In an example implementation, a penalty function is applied to the metric value of line pairs according to the deviation of their respective lateral spacing from the expected spacing of the edges of the joint 120. In block 228, the location of the edges and/or center of the joint 120 is determined based on the best pair of candidates determined in block 226. In an example implementation, the x-axis intercepts of the selected best pair for this image may be averaged (with uniform weighting or non-uniform weighting) with the x-axis intercepts of the best pair(s) from previous image(s) to arrive at a final determination of the x-axis intercepts of the edges and/or center of the joint 120. In an example implementation, the slopes of the selected best pair for this image may be averaged (with uniform weighting or non-uniform weighting) with the slopes of the best pair(s) from previous image(s) to arrive at a final determination of the slopes of the edges and/or center of the joint 120. In an example implementation, dynamic constraints may be applied to the slopes and/or x-intercepts of the best-choice pair for the current image such that the final determination of the slope and/or x-intercept of the edges and/or center of the joint 120 do not change too much from image-to-image. A large change in the slopes and/or x-intercepts between successive video frames, for example, may be used as an indication that something has gone wrong, such as misidentification of the joint edges.

In another example implementation, the pair whose combined metric value is the largest could simply be selected as the best-choice candidates for the two lines corresponding to the edges of the joint 120.

Hot, fast moving weld spatter flying through the camera field of view often appears as bright linear streaks or lines emanating primarily radially out from the weld arc. Because of the direction, relative linearity, and bright contrast created by fast moving hot weld spatter, it can appear similar to a well-lit weld joint edge during any given image frame where it is present. It can also obfuscate weld joint edge(s). For reducing or eliminating the effects of weld spatter, the bug 100 may: (1) decrease the camera exposure time, (2) shield the weld joint area from spatter, and/or (3) aim the camera far enough away from the weld arc to greatly reduce the amount of spatter entering the field of view with enough velocity and heat to appear as a well-lit edge of the joint 120.

If the exposure time of the camera can be shortened enough that the spatter does not move very far during the exposure, then the spatter will appear as a bright dot or short line in the image, which can then be eliminated from consideration as a joint edge candidate based on its length. Shortening the exposure time of the camera is limited by the time required for the imager to obtain enough light to produce an acceptable image. A shorter exposure time may be enabled by increased intensity of light output by lighting subsystem 112 and/or by using an HDR imager capable of producing a useable image with fewer photons incident upon the imager. In an example implementation, higher light intensity is achieved by pulsing the light output by lighting subsystem 112 in sync with the exposure of camera 104. In an example implementation, higher light intensity is achieved by using laser diode(s) in lighting subsystem 112 rather than LEDs or other incoherent light sources. Furthermore, the image processer 102 may implement an algorithm to look for features differentiating edge candidates due to weld spatter from edge candidates corresponding to actual edges of joint 120 and, upon determining a line to be the result of weld spatter, eliminating that line from the set of candidates. For example, weld spatter might cause an edge candidate that is brighter than edge candidates corresponding to the actual weld joint edges, weld spatter may create a wider or thinner edge candidate than edge candidates corresponding to actuals edges of seam 120, and/or edge candidates corresponding to weld spatter may be located beyond a threshold distance from weld joint edges detected in previous and subsequent image frames.

### Detection of Obscured Field of View

Given the harsh environmental conditions in which the bug 100 operates, it is likely that the camera's view of the joint 120 will become obscured from time to time. For example, weld spatter may stick to or damage a physical, rather than air-curtain-based, optical shield 108. Accordingly, aspects of this disclosure enable the bug 100 to detect when the view is obscured and, in response, take remedial action (e.g., discarding particular images, cleaning/replacing the optical shield, shutting down welding power, etc.).

In an example implementation, the pipes 118a and 118b may have fiducial markers on them (e.g., stickers or paint markings physically placed on the pipes 118 or light patterns projected onto the pipes 118) and the image processor 102 may implement algorithms for detecting such fiducial markers. Inability to detect all, or a portion of, such fiducial markers may be used as an indication that the field of view is obscured.

In an example implementation, the controller 122 may toggle the lighting subsystem 112 on and off and the image processor 102 may look for corresponding changes in brightness in the captured image. If the brightness does not change appropriately when supplemental lighting is toggled on/off, it may be used as an indication that the field of view obscured.

In an example implementation, the lengths of lines detected by the edge detection algorithm, being shorter than typical, may be used as an indication that the field of view is obscured.

In an example implementation, the lighting subsystem 112 may be configured to enable edge lighting (i.e., light incident at an angle substantially parallel to the optical shield 108) and/or dark-field lighting (e.g., light incident from within the enclosure) of the optical shield 108 to highlight dirt, scratches, or other obscuring features on the optical shield 108.

In an example implementation, the camera 104 and optical shield 108 may be moved in unison relative to the surface of the pipes 118. During such movement, features/objects on the pipes 118 would be expected to move according to the movement of the camera 104 and optical shield 108; objects on the optical shield 108, however, will remain substantially fixed. Such fixed-location features during movement of the camera 104 and optical shield 108 may be determined, by the image processor 102, to be debris/obstructions associated with the optical shield 108.

In an example implementation, inability to detect suitable weld joint edge candidates for some significant portion of the frames may be used as an indication that the field of view obscured. For example, if no suitable edge candidate pairs are found in more than 15% of images over a 5 second interval, then the image processer 102 or controller 122 could report a potential error due to an obscured optical path.

### Camera Environmental Protection

The bug 100 operates in a very harsh environment. This includes extreme heat from the weld (often in extreme cold ambient temperatures), weld spatter flying about, smoke, dust, liquids, strong electromagnetic fields, etc. Accordingly, protection of the sensitive optical and electrical components of the camera 104 and lens 106 is critical to the proper function and longevity of the bug 100. The mechanical enclosure 110 provides such protection.

The enclosure 110 may be made of electrically conductive materials and materials with high magnetic permeability surrounding the imager and electronics to protect the camera 104 from strong electromagnetic fields generated during the welding process.

In an example implementation, even the optical shield 108 is made of such materials (so long as the materials are still sufficiently transparent at the wavelengths captured by the imager(s) of the camera 104.

In an example implementation, the optical shield 108 is made of inexpensive plastic that is intended to be disposable. The shield may easily slide/snap into place such that it can be changed frequently by a weld operator without introducing substantial delays to the welding process.

In an example implementation, the optical shield 108 is a film/flexible sheet that can slide across an opening of the enclosure 110 from a spool of clean/new film onto a spool of used/dirty film. In this manner, a semi-continuous supply of clean shielding may be provided automatically at times determined by, for example, the controller 122 based on dirty shield detection algorithms such as those discussed above.

In an example implementation, an air blade/curtain is used to keep the optical shield 108 clean or to completely replace a physical barrier shield with an air flow shielding mechanism. Such may be achieved by, for example, delivering some of the weld cover gas to a low-volume, high-velocity nozzle that is directed across the shield face. The optical shield may be placed very close to the lens to minimize the required area of shield and minimize the required amount of gas for the air blade/curtain. The gas stream may use compressed air or weld cover gas. The nozzle may be designed to take advantage of the Coand 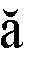 effect to entrain ambient air into the gas stream, reducing the amount of gas or compressed air needed.

The surface of the pipes 118 may be uneven and/or have protrusions or other obstructions on them such that the lens 106 may need to be sufficiently far away from the surface of the pipes 118 to avoid crashing into the surface of the pipe or other such obstacles. Accordingly, the height of the lens 106 may be mechanically (e.g., with a shock-absorbing guide wheel that runs along the surface of the pipes 118) and/or electromechanically (e.g., via subsystem 124) adjusted to avoid such obstacles. For example, the sensors 128 and/or camera 104 may be operable to "look" ahead to detect any obstacles and, in response to such a detection, the controller 122 may synchronize a lifting of the lens 106 via subsystem 124 to coincide with the lens passing over the obstacle.

Most imagers can operate over wide range of temperatures, but some imagers or electronics are not designed to work within specification at low or high temperature extremes. The enclosure 110 may provide convective or radiative cooling and/or resistive heating to maintain the electronics within a desired temperature range.

### Lighting

The lighting subsystem 112 is configured and controlled to enhance the features of interest to the imaging processing algorithm, and to suppress the effects of external lighting.

In an example implementation, the lighting subsystem 112 illuminates the workpiece(s) in a region of interest (which may include a liquid puddle and/or solidified weld) with sufficient light intensity to enable a sufficiently high camera frame rate (e.g., >15fps) with smaller physical aperture settings (e.g., f5.6 or larger) for sufficient focus depth-of-field.

In an example implementation, the lighting subsystem 112 provides dark-field lighting that highlights each edge of the joint 120 at a low angle of incidence across the pipe surface. For such an implementation, the average angle between emitted light and the outer surface of the pipe 118 is less than, for example, 25 degrees.

In an example implementation, lighting subsystem 112 is configured for bright-field lighting. In such an implementation, light is shined directly into the joint 120, causing significant direct reflection of light from the illuminated surfaces to enter the camera 104. The amount of bright-field and dark-field lighting made available at any time is adjustable for best highlighting of the features and to suppress reflections from unwanted features. For instance, during the root weld pass, at least some bright-field lighting may be used to eliminate any shadows on the walls of the joint 120, which shadows may result from dark-field lighting, and to allow the gap at the bottom of the joint 120 (i.e., at the inside wall of the pipes 118) to be seen and potentially measured. On the hot passes, however, significant bright-field lighting may cause reflections off the shiny metal from the root weld pass, which may potentially provide undesirable edge candidates that might confuse the joint edge image processing algorithm. Accordingly little or no bright field lighting may be used during the second or subsequent ("hot") pass(es). If no images of the weld bead or joint at the bottom of the root pass are desired, then bright-field lighting may not be used at all during the hot pass.

Light from lighting subsystem 112 may be from one or more LEDs that emit(s) light centered at a wavelength that matches the maximum camera sensitivity.

Light from lighting subsystem 112 may be from one or more LEDs and/or lasers having a narrow (e.g., relative to ambient lighting and/or light emitted by a welding arc) range of emitted wavelengths (e.g., 510 nanometers or less). The lighting subsystem 112 may be configured such that the emitted wavelengths fall in in a range of wavelength where the light emitted by a welding arc is relatively weak (that is, a trough in the spectral characteristic of the arc light). Such lighting may then be used in conjunction with an optical band-pass filter on the camera lens, where the light emitted by the lighting system falls within one or more passbands of the optical filter, and light from the welding arc and/or other ambient light falls outside the passband (e.g., in one or more stop bands) of the optical filter. In this manner, a large percentage of the light entering the imagers will have been emitted by the light source (and limit the amount of ambient light or light from the weld arc from entering the imager(s).

Since the lighting subsystem 112 might need to be close to the pipe surface to achieve a low angle of incidence, the lighting subsystem 112 might be adjustable to be easily repositioned in a higher, less vulnerable place when not being used (e.g., when the translational platform is being placed on or removed from the track 116).

The lighting subsystem 112 might be coupled to the subsystem 124 such that optimal position of the lighting subsystem 112 relative to the weld joint 120 is maintained throughout the weld. The sensors 128 and/or camera 104 may be operable to "look" ahead of the lighting subsystem 112 in the direction of travel to detect any obstacles along the joint 120 and, in response to such a detection, the controller 122 may synchronize a position adjustment of the lighting subsystem 112 to coincide with the time at which edge detection at or around the obstacle is needed. In an example implementation, the bug 100 makes an initial pass along the joint 120 without activating the weld torch 114. During this initial pass, optimal light position may be determined for each point along the joint 120. Then, during the root pass, lighting subsystem 112 may continually or periodically be repositioned according to the information stored to memory during the initial pass.

In an example implementation, lighting subsystem 112 may be controlled to have different characteristics (e.g., angle, intensity, wavelength, etc.) for different captured image frames. Images captures with different characteristics may be processed by the image processor 102 using different algorithms that perform different functions. For example, lighting subsystem 112 may be highly focused and emit only a narrow range of wavelengths for a first type of frame on which edge detection is to be performed, and lighting subsystem 112 may be less focused and emit a broader range of wavelengths for a second type of frame to be used for inspecting joint fit-up and/or for capturing general appearance of the weld bead/joint (e.g., for quality control inspection of a previous pass by the bug 100). The second type of frame may be captured, for example: during an initial pass in which the weld torch 114 is inactive, every Nth frame (with the other N-1 frames being of the first type) during a pass in which the weld torch 114 is active, during a final inspection pass in which the weld torch 114 is inactive, and/or in response to a detected (possible) arc anomaly and/or weld defect. If a possible quality control issue is detected during image processing of the second type of frame, an alert may be generated to notify an operator and/or to shut down the bug to prevent costly damage to the pipe.

The lighting subsystem 112 may be housed in an enclosure such as the enclosure 110 and/or otherwise be protected from the extreme temperatures, weld spatter, liquids, dust, etc.

### Joint Fit Sensing

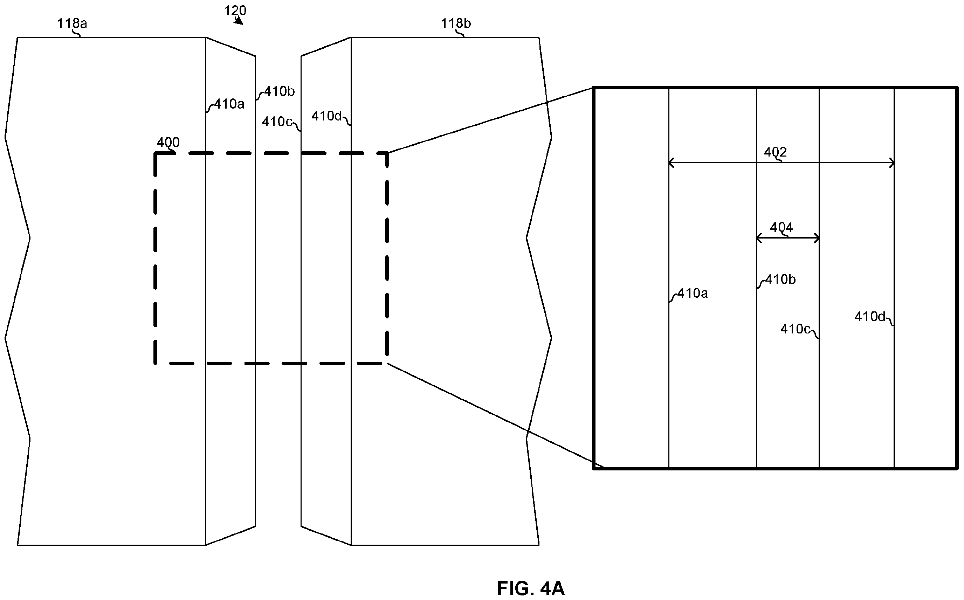

FIG. 4A shows an image 400 capturing field of view 400 which encompasses a portion of the joint 120. Where there is light behind the joint 120, and the view angle is very nearly straight into joint 120, a monocular image may be sufficient to determine the distance 402 between outer edges 410a and 410d of the joint 120 and/or the distance 404 between inner edges 410b and 410c of the joint 120. Otherwise it may be difficult to determine one or both of 402 and 404 with monocular images. Depth information provided by stereoscopic images, on the other hand, may greatly improve the ability to determine both of these distances.

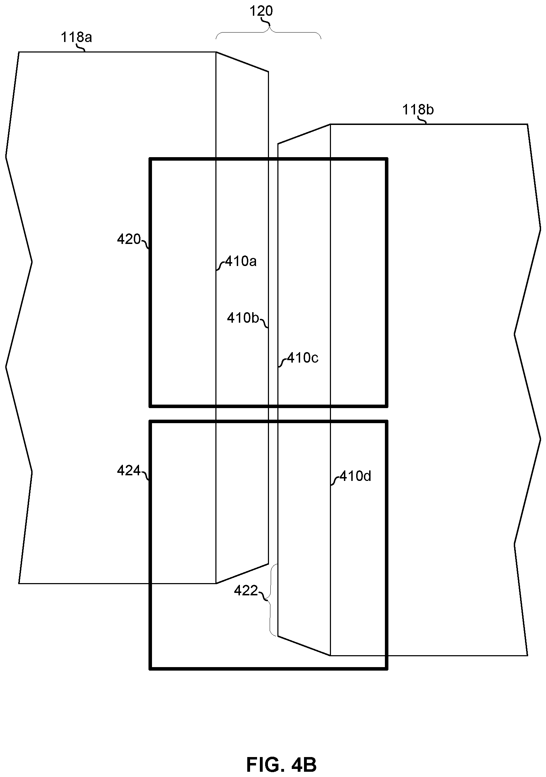

FIG. 4B shows two fields of view 420 and 424 of the camera 104. Where the images are captured with a monocular camera, determining the difference in shoulder height (called out as 422) may be difficult or impossible from the field of view 420. The field of view 424, on the other hand, may enable such a measurement, but such a field of view may be less suitable for edge detection. Accordingly, in an example implementation, the field of view may be altered between 420 and 424 and with frames captured of the field 420 used for edge detection and frames captured of the field 424 used for assessing joint fit. For example, the bug 100 may make an initial pass, without the torch powered on and with the camera 104 aimed at field 424, to measure joint fit. This information may be saved. Then, the bug may adjust the camera 104 to point at the field 420 and then proceed to power on the torch 114 and perform the root pass. Alternatively, if the camera 104 captures stereoscopic images, depth information determined from the stereoscopic images may be used to measure 422 from the field 420, thus avoiding the need for field of view 424.

Depth information determined by image processor 102 (e.g., through use of stereoscopic imaging and/or structured light projected onto the joint) and/or by sensors 128 may be used for: positioning and controlling the overlap welding between the two pipes 118a and 118b, enabling self-learning start/stop cycles in terms of weld ramp up/down, measuring weld pass thickness, measuring the previous weld dimensions and profile (which may be analyzed to determine the quality of the previous weld pass), and/or measuring "joint fit" (i.e., whether the distance(s) 402 and/or 404 is/are of a proper, uniform width; whether the shoulders of the pipes 118a and 118b are properly aligned, etc.). The controller 122 may adjust welding parameters and/or power source settings based on such measurements to compensate for non-uniform/non-ideal joint fit. Similarly, a warning may be generated if any characteristics of the joint fit are out of tolerance.

In an example implementation, structured light used for assessing joint fit could simply be a line of light projected from a light source at a known location and orientation relative to the camera. The image processor 102 may implement an algorithm, such a simple neural network which might be trained to calculate the high-low difference in the weld shoulders, given the observed pattern of light.

### Inter-Bug Data Sharing

Typically, after the pipe translation track 116 is temporarily attached to the pipe 118, a series of bugs may be mounted to the track 116 to perform different passes of the weld. FIG. 5 shows two bugs 100a and 100b attached to a track 116a, each of the bugs is performing a respective pass along the joint 120a. For example, bug 100a may be performing an initial inspection pass of joint 120a and the bug 100b may be performing the root pass on joint 120a. As another example, bug 100a may be performing the root pass on joint 120a and the bug 100b may be performing the hot pass on joint 120a. Data collected by either or both of the bugs 100a and 100b may be communicated to the other of the bugs 100a and 100b and/or to a networked database 504 via an access point/base station 506, for example.

If the track 116a can be relied on to not move relative to the pipe, or is configured to compensate for movement of the track 116 relative to the pipe (e.g., using sensors on and/or in the track 116), then the joint tracking path determined by bug 100a may be communicated to the bug 100b for use during its pass along the joint. The bug 100b may entirely rely on the data from 100a and thus may not need its own camera, image processor, and lighting. Alternatively, the bug 100b may have its own camera 104, image processor 102, and lighting subsystem 112 and may use the data from bug 100a to supplement its own data. The data may be communicated from bug 100a to bug 100b via either a direct link 512 (e.g., Bluetooth, Wi-Fi, Zigbee, or any other suitable communication protocol) or routed through the base station 506 via links 508 and 510 (e.g., Bluetooth, Wi-Fi, Zigbee, or any other suitable communication protocol).

If the track 116a is susceptible to movement, one or more sensors may be mounted to or integrated into the track to detect such movement and the readings from those sensors may be used to compensate the data collected from bug 100a.

In an example implementation, the bug 100a may be used only for gathering joint data for use by subsequent bugs and thus may not have a weld torch 114.

Also shown in FIG. 5 is a third bug 100c mounted to a second track 116b and performing a pass on joint 120b. Bug 100c may follow bugs 100a and 100b down the pipeline. That is, at the time instant shown, the bugs 100a and 100b have already performed respective passes along joint 120b and have now moved on to joint 120a. The bugs 100a and/or 100b may communicate data collected while on joint 120b to bug 120c either via a direct link such as 514 or via the access point/base station 506 and link 516. In this manner, when bug 100c is working on joint 120b is can use data pertaining to joint 120b previously collected by bug(s) 100a and/100b. Alternatively, Bugs 100a and 100b may follow bug 100c down the pipeline. That is, at the time instant shown, the bug 100c may have already performed a pass along joint 120a and has now moved on to joint 120b. The bug 100c may communicate data collected while on joint 120a to bug(s) 120a and/or 120b either via a direct link such as 514 or via the access point/base station 506 and link 516. In this manner, when bugs 100a and 100b are working on joint 120a they can use data pertaining to joint 120a previously collected by bug 100c.

In another example implementation, the three bugs may be on three different tracks at any given time and may follow each other down the pipeline. For example, bug 100a may perform a root pass on joint 120a and communicate data collected during the root pass to bug 100b (which, at that time, is on track 116b). Then, bug 100b is moved to track 116a and makes use of the information received from bug 100a for performing the hot pass. The bug 100b may also collect data during its pass. The bug 100b may then transmit its data and the data received from the bug 100a to bug 100c (which, at that time, is on track 116b). Bug 100c may then take advantage of data from both bugs 100a (the root pass data) and bug 100b (the fill pass data) for performing the cap pass.

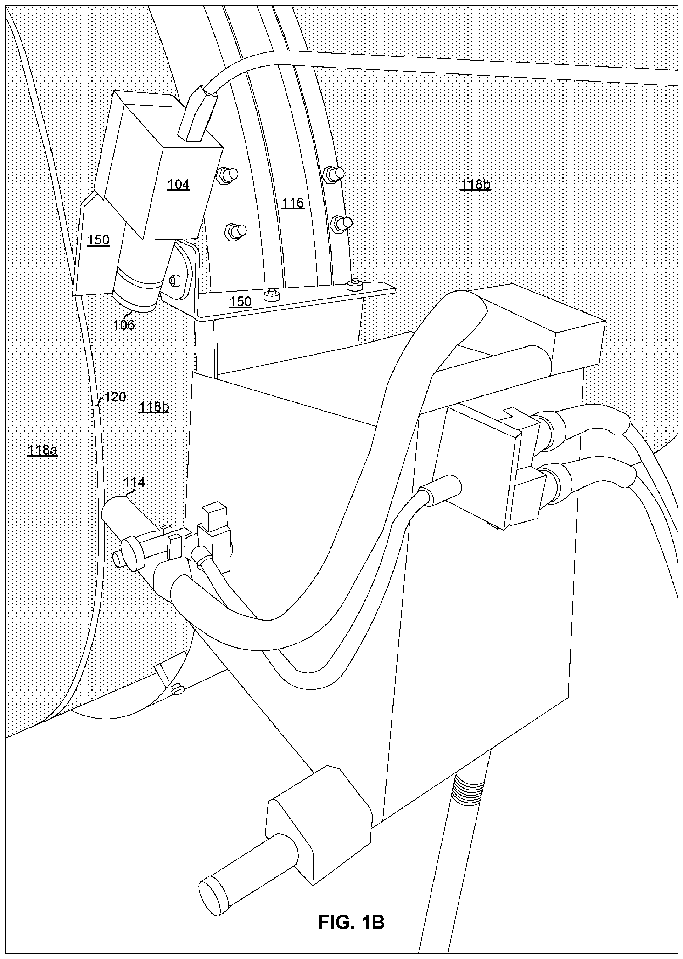

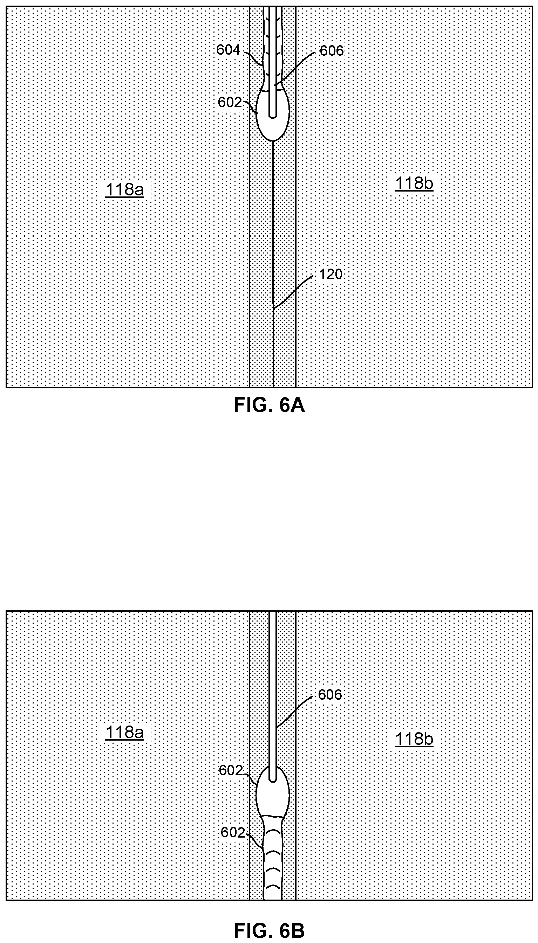

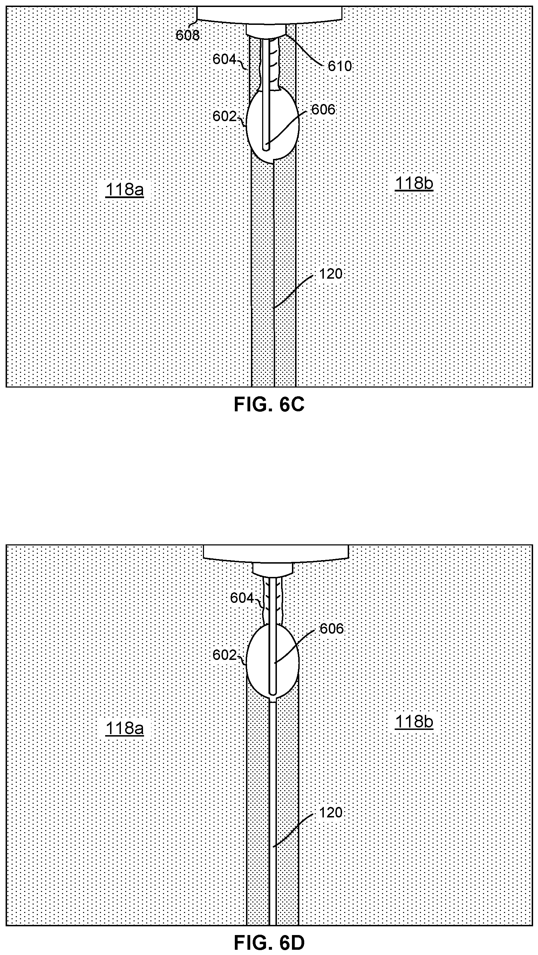

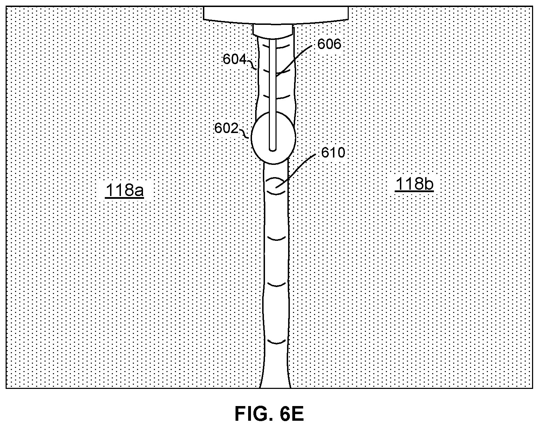

FIGS. 6A-6E depicts example images captured by the camera of the welding translation platform of FIG. 1. FIG. 6A is an image of the joint 120, weld puddle 602, electrode 606 and bead 604 taken with the camera 104 positioned in front of (in the direction of travel) the torch. In an example implementation, this view may be used for tracking the joint 120. FIG. 6B is an image of the weld puddle 602, electrode 606, and bead 604 taken with the camera 104 positioned behind (in the direction of travel) the torch. In an example implementation, this view may be used for measuring puddle size and monitoring penetration. FIG. 6C shows another view from in front of the torch, but from an overhead angle from which the gas nozzle 608 and contact tip 610 can be seen. In an example implementation, this view may be used for measuring electrode stick out (a measure of how far a consumable electrode is extended beyond the bottom exit of the contact tip before it reaches the arc) as well as alignment with the joint 120. In this regard, in the example shown the electrode 606 is not centered on the joint 120. In response to this image a signal may be sent to move the electrode 606 to the right and move the torch up or down in Z direction to maintain constant electrode stick out, and as a result constant heat input and constant penetration. FIG. 6D shows another view from in front of the torch and illustrates an example where there is a gap between the two pipes. In an example implementation, such an image may be used to measure this gap and adjust travel speed, wire feed speed, voltage, current, and/or some other parameter to better fill the gap. FIG. 6E shows another view from in front of the torch and illustrates an example where there is an anomaly (e.g., a divot or a hump) 610 in the bead 604 laid down during the previous pass. In an example implementation, such an image may be used to detect such anomalies and trigger adjustments (e.g., adjust travel speed, wire feed speed, voltage, current, and/or some other parameter) to try and correct the anomaly (e.g., slow down and/or increase wire speed in an attempt to deposit more metal to fill the divot).

In accordance with an example implementation of this disclosure, an automated welding device (e.g., 100) comprises a camera (e.g., 104) having a dynamic range of 60 dB or more, processing circuitry (e.g., 102 and 122), a welding torch (e.g., 114), and an electromechanical subsystem (e.g., 124). The camera is operable to capture, using visible, near infrared, and/or infrared wavelengths, an image (e.g., one of the images shown in FIGS. 3, 4A-4B, 6A-6E) of one or more workpieces (e.g., pipes 116a and 116b). The processing circuitry is operable to process the image for determination of physical characteristics of the one or more workpieces. The physical characteristics of the one or more workpieces may comprise: a size (e.g., width and/or depth of a joint (e.g., 120), volume of a joint corresponding to the joint, a shoulder height of the joint, a location of a joint relative to a contact tip of the welding torch, electrical stick out, arc length, weld puddle geometry (e.g., size and/or shape), weld puddle location (e.g., offset of center of the puddle from a center of a joint), weld penetration, solidified bead profile (e.g., size and/or shape), and/or characteristics (e.g., presence, size, shape, location, severity, etc.) of defects such as undercut, melt-through, lack of fusion, and uneven melting. The processing circuitry is operable to generate, during welding of the one or more workpieces by the welding torch, electrical signals which are based on the determined physical characteristics of the one or more workpieces, and which control one or more welding parameters of the automated welding device during the welding of the one or more workpieces. The one or more welding parameters may correspond to mechanical actions of the automated welding device and the electromechanical subsystem is operable to convert the electrical signals into the mechanical actions of the automated welding device. The automated welding device may comprise a transceiver (e.g., 130) that is operable to transmit the determined physical characteristics onto a wired or wireless communication link. The transceiver may be operable to receive information about the one or more workpieces from another automated pipe welding device that previously performed a pass along a joint between the one or more workpieces, and the generation of the electrical signals may be based on the information about the one or more workpieces from the other automated welding device. The transceiver may be operable to receive information about the one or more workpieces from another automated welding device that previously performed a pass along the one or more workpieces. The processing circuitry may be operable to compensate the information based on movement of a track on which the automated welding device is mounted relative to a position of the track when the other automated welding device captured the information. Mechanical actions of the automated welding device may comprise movement of the automated welding device along a joint and/or movement of a contact tip of the welding torch relative to the joint. The automated welding device may comprise an optical shield to protect the camera, and the processing of the image may comprise an inspection for obstructions on the optical shield. The automated welding device may comprise a lighting subsystem to illuminate the workpiece(s) (e.g., including illuminating ahead of the puddle, the liquid puddle, and/or the solidified weld behind the puddle), and the electrical signals may control characteristics of light generated by the lighting system such that the characteristics of the light vary based on the determined physical characteristics of the one or more workpieces and/or based on which pass (e.g., root, fill, cap, etc.) along a joint is being performed. The characteristics of the light may comprise whether the light is bright field or dark field. The processing of the image comprises identification of edge candidates present in the image. The identification of actual weld joint edges may comprise filtering of erroneous edge candidates resulting from weld spatter based on one or more of: edge candidate length, edge candidate orientation, edge candidate thickness, and edge candidate brightness. The image may capture fiducial markings on the one or more workpieces, and the processing of the image may comprise a determination, based on the fiducial markings, of a position along a joint at which the image was captured. The automated welding device may comprise a non-image-based sensor (e.g., one or more sensors 128), and the determination of the physical characteristics of the one or more workpieces may be based on an output of the non-image-based sensor. The determination of the physical characteristics of the one or more workpieces may be based on *a priori* knowledge of the one or more workpieces and/or *a priori* knowledge of the automated welding device (e.g., stored in memory of controller 122). The determination of the physical characteristics may occur during a first pass (e.g., a root pass or a fill pass) along a joint, and the generation of the electrical signal may occur during a subsequent pass along the joint (e.g., a fill pass or a cap pass). The processing circuitry may be operable to perform feed-forward and/or feedback based control one or more of: a voltage, a current, heat input to said one or more work pieces, wire speed, travel speed of said automated welding device, and/or distance between a contact tip of said welding torch and said one or more workpieces, based on said determined physical characteristics of said one or more workpieces. Controlling heat input may, for example, comprise controlling voltage between the workpiece(s) and the welding torch, current delivered from the torch to the workpiece(s), and speed of the automated welding device (slower speed corresponding to higher heat input).

In accordance with an example implementation of this disclosure, the processing circuitry is operable to synchronize capture of the images to times when one or more of: voltage between an electrode of the welding torch and the one or more workpieces is below a first determined threshold (e.g., 14V), current flowing between the welding torch and the one or more workpieces is below a second determined threshold (e.g., 50A), and the product of the voltage and the current is below a third determined threshold. In an example implementation, the voltage, current, and/or power may need to be below the applicable threshold for a determined period of time (e.g., the exposure time of the camera, or a substantial portion of the exposure time) to trigger image capture, or to keep an image that was capture (i.e., if a capture is triggered and it is later determined that the voltage, current, and/or power was not below the threshold for the minimum required amount of time, then the captured image may be discarded). The processing circuitry is operable to process the images for determination of physical characteristics of the one or more workpieces. The processing circuitry is operable to generate, during welding of the one or more workpieces by the welding torch, electrical signals which are based on the determined physical characteristics of the one or more workpieces, and which control one or more welding parameters of the automated welding device during the welding of the one or more workpieces. The one or more welding parameters may correspond to mechanical actions of the automated welding device and the electromechanical subsystem is operable to convert the electrical signals into the mechanical actions. The automated welding device may comprise a voltage sensor and/or current sensor (e.g., one or more of sensors 128), and the synchronization may be based on an output of the voltage sensor (e.g., when the voltage between contact tip and workpiece is below a threshold). The automated welding device may comprise a photodiode (e.g., one of sensors 128), and the synchronization may be based on an output of the photodiode (e.g., when the current or voltage output by the photodiode is below a threshold).

As used herein, "joint" encompasses any portion of one or more workpieces to be welded. As an example, "joint" encompasses the edges along which two workpieces are to be joined. As another example, "joint" encompasses an area of a workpiece which is to be cladded/overlaid/filled/hardfaced.

As used herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first set of one or more lines of code and may comprise a second "circuit" when executing a second set of one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g. and for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

The present method and/or system may be realized in hardware, software, or a combination of hardware and software. The present methods and/or systems may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope as defined by the appended claims. Therefore, it is intended that the present method and/or system not be limited to the particular implementations disclosed, but that the present method and/or system will include all implementations falling within the scope of the appended claims.

## Claims

1. A system comprising:
an automated welding device (100) comprising a camera (104), processing circuitry (102, 122), a welding torch (114), and an electromechanical subsystem (124), wherein:
said camera (104) is operable to capture, using visible and/or infrared wavelengths, images (302) of one or more workpieces (118a, 118b);
said processing circuitry (102, 122) is operable to process said images (302) for determination of physical characteristics of said one or more workpieces (118a, 118b);
said processing circuitry (102, 122) is operable to generate, during welding of said one or more workpieces (118a, 118b) by said welding torch (114), electrical signals which are based on said determined physical characteristics of said one or more workpieces (118a, 118b), and which control one or more welding parameters of said automated welding device (100) during said welding of said one or more workpieces (118a, 118b); and
said electromechanical subsystem (124) is operable to convert said electrical signals into said one or more welding parameters of said automated welding device (100),
**characterized in that**
said processing circuitry (102, 122) is operable to synchronize said capture of said images (302) to times when one or more:
voltage between an electrode of said welding torch (114) and said one or more workpieces (118a, 118b) is below a first determined threshold;
current flowing between said welding torch (114) and said one or more workpieces (118a, 118b) is below a second determined threshold;
the product of said voltage and said current is below a third determined threshold; and
a state of a control signal that impacts arc intensity.

2. The system of claim 1,
wherein said automated welding device (100) comprises a transceiver (130) that is operable to transmit said determined physical characteristics onto a wired or wireless communication link (508, 510, 512, 514, 516).

3. The system of claim 1 or 2,
wherein said one or more welding parameters correspond to one or both of: movement of said automated welding device (100) along a joint (120), and movement of a contact tip (610) of said welding torch (114) relative to said one or more workpieces (118a, 118b).

4. The system of one of the preceding claims, wherein:
said automated welding device (100) comprises an optical shield (108) to protect said camera (104); and
said processing of said images (302) comprises an inspection for obstructions on said optical shield (108).

5. The system of one of the preceding claims, wherein:
said automated welding device (100) comprises a lighting subsystem (112); and
said electrical signals control a characteristic of light generated by said lighting subsystem (112) such that said characteristic of said light varies based on one or both of:
said determined physical characteristics of said one or more workpieces (118a, 118b); and which pass along a joint (120) is being performed by said automated welding device (100),
wherein said characteristics of said light comprise whether said light is bright field or dark field.

6. The system of one of the preceding claims, wherein:
said processing of said images (302) comprises identification of edges present in said images (302); and
said identification of said edges comprises filtering of erroneous edge candidates resulting from weld spatter based on one or more of: edge candidate length, edge candidate orientation, edge candidate thickness, and edge candidate brightness.

7. The system of one of the preceding claims,
wherein said physical characteristics of said one or more workpieces (118a, 118b) comprise one or more of: a size of said joint (120), a shoulder height (422) of said joint (120), a location of a joint (120) relative to a contact tip (610) of said welding torch (114), weld puddle geometry, weld puddle location, weld penetration, solidified bead profile, contact tip (610) to work distance, electrical stick out, arc length, weld puddle temperature, and
presence of defects including one or more of undercut, melt-through, lack of fusion, and uneven melting.

8. The system of one of the preceding claims, wherein:
said images (302) capture fiducial markings on said one or more workpieces (118a, 118b); and
said processing of each one of said images (302) comprises a determination, based on said fiducial markings, of a position along a joint (120) at which said one of said images (302) was captured.

9. The system of one of the preceding claims, wherein:
said automated welding device (100) comprises a non-image-based sensor (128); and
said determination of said physical characteristics of said one or more workpieces (118a, 118b) is based on an output of said non-image-based sensor (128) in a multi-modal learning configuration.

10. The system of one of the preceding claims, wherein said determination of said physical characteristics of said one or more workpieces (118a, 118b) is based on a priori knowledge of said one or more workpieces (118a, 118b) and/or a priori knowledge of said automated welding device (100), wherein said processing circuitry (102, 122) is operable to:
perform said determination of said physical characteristics, including storing said determined physical characteristics to memory, during a first pass along a joint (120); and
perform said generation of said electrical signals during a second pass along said joint (120).

11. The system of one of the preceding claims, wherein:
said automated welding device (100) comprises a voltage sensor (128), current sensor (128) and/or a photodiode; and
said synchronization is based on an output of said voltage sensor (128) and/or an output of said photodiode.

12. The system of one of the preceding claims,
wherein said processing circuitry (102, 122) is operable to perform feedback and/or feed-forward control one or more of: a voltage, a current, heat input to said one or more work pieces, wire speed, travel speed of said automated welding device (100), and/or distance between a contact tip (610) of said welding torch (114) and said one or more workpieces (118a, 118b), based on said determined physical characteristics of said one or more workpieces (118a, 118b).

13. The system of one of the preceding claims, wherein:
said electrode is a wire fed at constant speed or in a reciprocating manner;
and said voltage falls below said first threshold, said current falls below said second threshold, and/or said power falls below said third threshold as a result of a short circuit between said wire and said one or more workpieces (118a, 118b).

14. The system of one of the preceding claims, wherein:
said camera (104) comprises a CMOS or CCD imager; and
said camera (104) is operable to dynamic range of 60 dB or more for said images (302) through use of one or more of:
a nonlinear response of said solid state imager;
local adaptation;
well capacity adjustment;
spatially varying exposure times; and
per pixel control of integration time to saturation; and
fusion of multiple captures with varying integration time, and/ or
wherein:
said automated welding device (100) comprises the lighting subsystem (112) configured to illuminate said one or more workpieces (118a, 118b) for said capture of said image;
said automated welding device (100) comprises an optical filter which filters light incident on the imager of said camera (104);
a peak in the spectral characteristic of light emitted by said lighting subsystem (112) falls within a passband of said optical filter; and
a peak in spectral characteristic of light emitted by a welding arc generated by said automated welding device (100) falls within a stop band of said optical filter.

15. The system of one of the preceding claims,
wherein said automated welding device (100) comprises a welding translation platform configured to propel itself along a track (116) mounted to a pipe.

## Patentansprüche

1. System, umfassend:
automatische Schweißvorrichtung (100), die eine Kamera (104), Verarbeitungsschaltungsanordnung (102, 122), einen Schweißbrenner (114) und ein elektromechanisches Subsystem (124) umfasst, wobei
die Kamera (104) zum Aufnehmen von Bildern (302) eines oder mehrerer Werkstücke (118a, 118b) unter Verwendung sichtbarer und/oder Infrarot-Wellenlängen ausgelegt ist;
die Verarbeitungsschaltungsanordnung (102, 122) zum Verarbeiten der Bilder (302) zur Bestimmung physikalischer Charakteristiken des einen oder der mehreren Werkstücke (118a, 118b) ausgelegt ist;
die Verarbeitungsschaltungsanordnung (102, 122) so ausgelegt ist, dass sie während des Schweißens des einen oder der mehreren Werkstücke (118a, 118b) durch den Schweißbrenner (114) elektrische Signale erzeugt, die auf den bestimmten physikalischen Charakteristiken des einen oder der mehreren Werkstücke (118a, 118b) basieren und die einen oder mehrere Schweißparameter der automatischen Schweißvorrichtung (100) während des Schweißens des einen oder der mehreren Werkstücke (118a, 118b) steuern; und
das elektromechanische Subsystem (124) zum Umwandeln der elektrischen Signale in den einen oder die mehreren Schweißparameter der automatischen Schweißvorrichtung (100) ausgelegt ist,
**dadurch gekennzeichnet, dass**
die Verarbeitungsschaltungsanordnung (102, 122) so ausgelegt ist, dass sie die Aufnahme der Bilder (302) mit Zeiten synchronisiert, wenn eines oder mehreres von Folgendem:
eine Spannung zwischen einer Elektrode des Schweißbrenners (114) und dem einen oder den mehreren Werkstücken (118a, 118b) unter einer ersten vorbestimmten Schwelle liegt;
ein Strom, der durch den Schweißbrenner (114) und das eine oder die mehreren Werkstücke (118a, 118b) fließt, unter einer zweiten bestimmten Schwelle liegt;
das Produkt der Spannung und des Stroms unter einer dritten bestimmten Schwelle liegt; und
ein Zustand eines Steuersignals Auswirkungen auf die Lichtbogenintensität hat.

2. System nach Anspruch 1,
wobei die automatische Schweißvorrichtung (100) einen Sendeempfänger (130) umfasst, der zum Senden der bestimmten physikalischen Charakteristiken auf einer drahtgebundenen oder drahtlosen Kommunikationsverbindungen (508, 510, 512, 514, 516) ausgelegt ist.

3. System nach Anspruch 1 oder 2,
wobei der eine oder die mehreren Schweißparameter einer von einer Bewegung der automatischen Schweißvorrichtung (100) entlang eines Schweißstoßes (120) und einer Bewegung einer Kontaktspitze (610) des Schweißbrenners (114) in Bezug auf das eine oder die mehreren Werkstücke (118a, 118b) oder beiden entsprechen.

4. System nach einem der vorhergehenden Ansprüche, wobei:
die automatische Schweißvorrichtung (100) eine optische Abschirmung (108) zum Schützen der Kamera (104) umfasst; und
das Verarbeiten der Bilder (302) ein Prüfen der optischen Abschirmung (108) auf Hindernisse umfasst.

5. System nach einem der vorhergehenden Ansprüche, wobei:
die automatische Schweißvorrichtung (100) ein Beleuchtungssubsystem (112) umfasst; und
die elektrischen Signale eine Charakteristik von Licht steuern, das vom Beleuchtungssubsystem (112) erzeugt wird, derart dass die Charakteristik des Lichts variiert basierend auf einem oder beiden von:
den bestimmten physikalischen Charakteristiken des einen oder der mehreren Werkstücke (118a, 118b); und dem Arbeitsgang, welcher von der automatischen Schweißvorrichtung (100) entlang eines Schweißstoßes (120) durchgeführt wird,
wobei die Charakteristiken des Lichts umfassen, ob das Licht Hellfeld oder Dunkelfeld ist.

6. System nach einem der vorhergehenden Ansprüche, wobei:
das Verarbeiten der Bilder (302) ein Identifizieren von Kanten umfasst, die in den Bildern (302) vorhanden sind; und
das Identifizieren der Kanten ein Filtern von fehlerhaften Kantenkandidaten, die aus Schweißspritzern resultieren, basierend auf einer oder mehreren von Kantenkandidatenlänge, Kantenkandidatenorientierung, Kantenkandidatendicke und Kantenkandidatenhelligkeit umfasst.

7. System nach einem der vorhergehenden Ansprüche,
wobei die physikalischen Charakteristiken des einen oder der mehreren Werkstücke (118a, 118b) eine oder mehrere umfassen von: einer Größe des Schweißstoßes (120), einer Schulterhöhe (422) des Schweißstoßes (120), einer Position eines Schweißstoßes (120) in Bezug auf eine Kontaktspitze (610) des Schweißbrenners (114), einer Schmelzbadgeometrie, einer Schmelzbadposition, einer Einbrandtiefe, einem Profil einer erstarrten Schweißraupe, einer Distanz von Kontaktspitze (610) zu Arbeit, einer freien Drahtelektrodenlänge, einer Lichtbogenlänge, einer Schmelzbadtemperatur und
Vorhandensein von Fehlern, die eines oder mehrere von Einbrandkerbe, Durchbrennen, Bindefehler und ungleichmäßigem Schweißen umfassen.

8. System nach einem der vorhergehenden Ansprüche, wobei:
die Bilder (302) Bezugsmarkierungen auf dem einen oder den mehreren Werkstücken (118a, 118b) erfassen; und
das Verarbeiten eines jeden der Bilder (302) ein Bestimmen einer Position entlang eines Schweißstoßes (120), in welcher eines der Bilder (302) aufgenommen wurde, basierend auf den Bezugsmarkierungen umfasst.

9. System nach einem der vorhergehenden Ansprüche, wobei:
die automatische Schweißvorrichtung (100) einen nicht auf Bildern basierten Sensor (128) umfasst; und
das Bestimmen der physikalischen Charakteristiken des einen oder der mehreren Werkstücke (118a, 118b) auf einer Ausgabe des nicht auf Bildern basierten Sensors (128) in einer multimodalen Lernkonfiguration basiert.

10. System nach einem der vorhergehenden Ansprüche, wobei das Bestimmen der physikalischen Charakteristiken des einen oder der mehreren Werkstücke (118a, 118b) auf einer A-priori-Kenntnis des einen oder der mehreren Werkstücke (118a, 118b) und/oder einer A-priori-Kenntnis der automatischen Schweißvorrichtung (100) basiert, wobei die Verarbeitungsschaltungsanordnung (102, 122) ausgelegt ist zum:
Durchführen des Bestimmens der physikalischen Charakteristiken, umfassend ein Speichern der bestimmten physikalischen Charakteristiken in einem Speicher während eines ersten Arbeitsgangs entlang eines Schweißstoßes (120); und
Durchführen des Erzeugens der elektrischen Signale während eines zweiten Arbeitsgangs entlang der Schweißstoßes (120).

11. System nach einem der vorhergehenden Ansprüche, wobei:
die automatische Schweißvorrichtung (100) einen Spannungssensor (128), einen Stromsensor (128) und/oder eine Fotodiode umfasst; und
das Synchronisieren auf einer Ausgabe des Spannungssensors (128) und/oder einer Ausgabe der Fotodiode basiert.

12. System nach einem der vorhergehenden Ansprüche, wobei die Verarbeitungsschaltungsanordnung (102, 122) so ausgelegt ist, dass sie basierend auf den bestimmten physikalischen Charakteristiken des einen oder der mehreren Werkstücke (118a, 118b) Rückkopplungsregelung und/oder Vorwärtskopplungsregelung eines oder mehrerer von einer Spannung, einem Strom, Wärme, die in das eine oder die mehreren Werkstücke eingegeben wird, einer Drahtgeschwindigkeit, einer Verfahrgeschwindigkeit der automatischen Schweißvorrichtung (100), und/oder einer Distanz zwischen der Kontaktspitze (610) des Schweißbrenners (114) und dem einen oder den mehreren Werkstücken (118a, 118b) durchführt.

13. System nach einem der vorhergehenden Ansprüche, wobei:
der Elektrode ein Draht bei einer konstanten Geschwindigkeit oder in einer reziprozierenden Weise zugeführt wird; und infolge eines Kurzschlusses zwischen dem Draht und dem einen oder den mehreren Werkstücken (118a, 118b) die Spannung unter die erste Schwelle abfällt, der Strom unter die zweite Schwelle abfällt und/oder die Leistung unter die dritte Schwelle abfällt.

14. System nach einem der vorhergehenden Ansprüche, wobei:
die Kamera (104) ein CMOS- oder CCD-Bildwandler ist; und
die Kamera (104) für einen dynamischen Bereich von 60 dB oder mehr für die Bilder (302) ausgelegt ist, indem sie eines oder mehreres verwendet von:
einer nichtlinearen Antwort des Halbleiterbildwandlers;
lokaler Anpassung;
Einstellung einer Well-Kapazität;
räumlich veränderlicher Belichtungszeiten; und
Pro-Pixel-Steuerung von Integrationszeit bis Sättigung; und
Fusion mehrerer Aufnahmen mit veränderlicher Integrationszeit, und/oder wobei:
die automatische Schweißvorrichtung (100) das Beleuchtungssubsystem (112) umfasst, das zum Beleuchten des einen oder der mehreren Werkstücke (118a, 118b) zur Aufnahme des Bildes ausgelegt ist;
die automatische Schweißvorrichtung (100) ein optisches Filter umfasst, das Licht filtert, das auf den Bildwandler der Kamera (104) einfällt;
eine Spitze der spektralen Charakteristik von Licht, das vom Beleuchtungssubsystem (112) emittiert wird, in ein Durchlassband des optischen Filters fällt; und
eine Spitze der spektralen Charakteristik von Licht, das von einem Schweißlichtbogen emittiert wird, der von der automatischen Schweißvorrichtung (100) erzeugt wird, in ein Sperrband des optischen Filters fällt.

15. System nach einem der vorhergehenden Ansprüche,
wobei die automatische Schweißvorrichtung (100) eine Schweiß-Verschiebeplattform umfasst, die so ausgelegt ist, dass sie sich entlang einer Bahn (116), die auf einem Rohr montiert ist, selbst antreibt.

## Revendications

1. Système comprenant :
un dispositif de soudage automatisé (100) comprenant une caméra (104), des circuits de traitement (102, 122), un chalumeau soudeur (114), et un sous-système électromécanique (124), dans lequel :
ladite caméra (104) peut capturer, en utilisant des longueurs d'onde visibles et/ou infrarouges, des images (302) d'une ou plusieurs pièces de fabrication (118a, 118b) ;
lesdits circuits de traitement (102, 122) peuvent traiter lesdites images (302) pour déterminer des caractéristiques physiques de ladite ou desdites pièces de fabrication (118a, 118b) ;
lesdits circuits de traitement (102, 122) peuvent générer, pendant le soudage de ladite ou desdites pièces de fabrication (118a, 118b) par ledit chalumeau soudeur (114), des signaux électriques qui sont basés sur lesdites caractéristiques physiques déterminées de ladite ou desdites pièces de fabrication (118a, 118b), et qui contrôlent un ou plusieurs paramètres de soudage dudit dispositif de soudage automatisé (100) pendant ledit soudage de ladite ou desdites pièces de fabrication (118a, 118b) ; et
ledit sous-système électromécanique (124) peut convertir lesdits signaux électriques en ledit ou lesdits paramètres de soudage dudit dispositif de soudage automatisé (100),
**caractérisé en ce que**
lesdits circuits de traitement (102, 122) peuvent synchroniser ladite capture desdites images (302) avec des moments où :
la tension entre une électrode dudit chalumeau soudeur (114) et ladite ou lesdites pièces de fabrication (118a, 118b) est inférieure à un premier seuil déterminé ; et/ou
le courant circulant entre ledit chalumeau soudeur (114) et ladite ou lesdites pièces de fabrication (118a, 118b) est inférieur à un deuxième seuil déterminé ; et/ou
le produit de ladite tension et dudit courant est inférieur à un troisième seuil déterminé ; et/ou
un état d'un signal de contrôle qui influence l'intensité de l'arc.

2. Système de la revendication 1,
dans lequel ledit dispositif de soudage automatisé (100) comprend un émetteur-récepteur (130) qui peut transmettre lesdites caractéristiques physiques déterminées sur une liaison de communication filaire ou sans fil (508, 510, 512, 514, 516).

3. Système de la revendication 1 ou 2,
dans lequel ledit ou lesdits paramètres de soudage correspondent à : un déplacement dudit dispositif de soudage automatisé (100) le long d'un joint (120), et/ou un déplacement d'une pointe de contact (610) dudit chalumeau soudeur (114) par rapport à ladite ou auxdites pièces de fabrication (118a, 118b).

4. Système d'une des revendications précédentes, dans lequel :
ledit dispositif de soudage automatisé (100) comprend un écran optique (108) pour protéger ladite caméra (104) ; et
ledit traitement desdites images (302) comprend une inspection pour des obstacles sur ledit écran optique (108).

5. Système d'une des revendications précédentes, dans lequel :
ledit dispositif de soudage automatisé (100) comprend un sous-système d'éclairage (112) ; et
lesdits signaux électriques contrôlent une caractéristique de la lumière générée par ledit sous-système d'éclairage (112) de telle sorte que ladite caractéristique de ladite lumière varie sur la base :
desdites caractéristiques physiques déterminées de ladite ou desdites pièces de fabrication (118a, 118b) ; et/ou de la passe le long d'un joint (120) qui est effectuée par ledit dispositif de soudage automatisé (100),
dans lequel lesdites caractéristiques de ladite lumière comprennent le fait que ladite lumière est en champ clair ou en champ sombre.

6. Système d'une des revendications précédentes, dans lequel :
ledit traitement desdites images (302) comprend l'identification de bords présents dans lesdites images (302) ; et
ladite identification desdits bords comprend le filtrage de candidats bords erronés résultant d'éclaboussures de soudage sur la base d'un ou plusieurs éléments parmi : une longueur de candidat bord, une orientation de candidat bord, une épaisseur de candidat bord, une luminosité de candidat bord.

7. Système d'une des revendications précédentes,
dans lequel lesdites caractéristiques physiques de ladite ou desdites pièces de fabrication (118a, 118b) comprennent un ou plusieurs éléments parmi : une taille dudit joint (120), une hauteur d'épaulement (422) dudit joint (120), un emplacement d'un joint (120) par rapport à une pointe de contact (610) dudit chalumeau soudeur (114), la géométrie du bain de fusion, l'emplacement du bain de fusion, la pénétration de la soudure, le profil du cordon solidifié, la distance de la pointe de contact (610) au travail, l'extension de l'électrode, la longueur de l'arc, la température du bain de fusion, et
la présence de défauts comportant un ou plusieurs éléments parmi un caniveau, une pleine pénétration, une absence de fusion, et une fusion irrégulière.

8. Système d'une des revendications précédentes, dans lequel :
lesdites images (302) capturent des repères sur ladite ou lesdites pièces de fabrication (118a, 118b) ; et
ledit traitement de chacune desdites images (302) comprend une détermination, sur la base desdits repères, d'une position le long d'un joint (120) à laquelle ladite une desdites images (302) a été capturée.

9. Système d'une des revendications précédentes, dans lequel :
ledit dispositif de soudage automatisé (100) comprend un capteur non à base d'images (128) ; et
ladite détermination desdites caractéristiques physiques de ladite ou desdites pièces de fabrication (118a, 118b) est basée sur une sortie dudit capteur non à base d'images (128) dans une configuration d'apprentissage multimodal.

10. Système d'une des revendications précédentes, dans lequel ladite détermination desdites caractéristiques physiques de ladite ou desdites pièces de fabrication (118a, 118b) est basée sur une connaissance a priori de ladite ou desdites pièces de fabrication (118a, 118b) et/ou une connaissance a priori dudit dispositif de soudage automatisé (100),
dans lequel lesdits circuits de traitement (102, 122) peuvent :
effectuer ladite détermination desdites caractéristiques physiques, notamment stocker lesdites caractéristiques physiques déterminées dans une mémoire, pendant une première passe le long d'un joint (120) ; et
effectuer ladite génération desdits signaux électriques pendant une deuxième passe le long dudit joint (120).

11. Système d'une des revendications précédentes, dans lequel :
ledit dispositif de soudage automatisé (100) comprend un capteur de tension (128), un capteur de courant (128) et/ou une photodiode ; et
ladite synchronisation est basée sur une sortie dudit capteur de tension (128) et/ou une sortie de ladite photodiode.

12. Système d'une des revendications précédentes,
dans lequel lesdits circuits de traitement (102, 122) peuvent effectuer un asservissement et/ou une régulation avec action prévisionnelle d'un ou plusieurs éléments parmi : une tension, un courant, la chaleur apportée à ladite ou auxdites pièces de fabrication, la vitesse du fil, la vitesse de déplacement dudit dispositif de soudage automatisé (100), et/ou la distance entre une pointe de contact (610) dudit chalumeau soudeur (114) et ladite ou lesdites pièces de fabrication (118a, 118b), sur la base desdites caractéristiques physiques déterminées de ladite ou desdites pièces de fabrication (118a, 118b).

13. Système d'une des revendications précédentes, dans lequel :
ladite électrode est un fil avancé à vitesse constante ou à la manière d'un va-et-vient ;
et ladite tension chute sous ledit premier seuil, ledit courant chute sous ledit deuxième seuil, et/ou ladite puissance chute sous ledit troisième seuil en conséquence d'un courts-circuit entre ledit fil et ladite ou lesdites pièces de fabrication (118a, 118b).

14. Système d'une des revendications précédentes, dans lequel :
ladite caméra (104) comprend un imageur CMOS ou CCD ; et
ladite caméra (104) est utilisable sur une gamme dynamique de 60 dB ou plus pour lesdites images (302) par l'utilisation d'un ou plusieurs éléments parmi :
une réponse non linéaire dudit imageur à semiconducteurs ;
une adaptation locale ;
un réglage de la capacité de puits ;
des temps d'exposition variant spatialement ; et
un contrôle par pixel du temps d'intégration jusqu'à la saturation ; et
la fusion de multiples captures avec un temps d'intégration variable, et/ou dans lequel :
ledit dispositif de soudage automatisé (100) comprend le sous-système d'éclairage (112) configuré pour éclairer ladite ou lesdites pièces de fabrication (118a, 118b) pour ladite capture de ladite image ;
ledit dispositif de soudage automatisé (100) comprend un filtre optique qui filtre la lumière incidente sur l'imageur de ladite caméra (104) ;
un pic dans la caractéristique spectrale de la lumière émise par ledit sous-système d'éclairage (112) tombe dans une bande passante dudit filtre optique ; et
un pic dans la caractéristique spectrale de la lumière émise par un arc de soudage généré par ledit dispositif de soudage automatisé (100) tombe dans une bande d'arrêt dudit filtre optique.

15. Système d'une des revendications précédentes,
dans lequel ledit dispositif de soudage automatisé (100) comprend une plate-forme de translation de soudage configurée pour se propulser le long d'un rail (116) monté sur un tuyau.
